# EUROPÄISCHE PATENTSCHRIFT

(11) **EP 2 860 492 B1**
(45) Veröffentlichungstag und Bekanntmachung des Hinweises auf die Patenterteilung: **28.02.2018**
(21) Anmeldenummer: 13187896.9
(22) Anmeldetag: 09.10.2013
(51) Int. Cl.: G01C 15/00, G01S 7/481, G01S 17/02, G01S 7/497, G01S 17/42

(54) **Vermessungsgerät zum optischen Abtasten einer Umgebung**
Measuring device for optically scanning an environment
Appareil de mesure pour le balayage optique d'un environnement

(43) Veröffentlichungstag der Anmeldung: 15.04.2015
(73) Patentinhaber: Hexagon Technology Center GmbH, 9435 Heerbrugg (CH)
(72) Erfinder: Bestler, Simon, DE-88085 Langenargen (DE); Scheja, Jochen, CH-9435 Heerbrugg (CH)
(74) Vertreter: Kaminski Harmann

(56) Entgegenhaltungen:
- EP-A1- 1 517 415
- EP-A1- 2 523 017
- EP-A1- 2 620 746
- EP-A2- 1 906 141

## Beschreibung

Die Erfindung betrifft ein Vermessungsgerät, insbesondere einen Laserscanner zum optischen Abtasten bzw. Vermessen einer Umgebung, nach dem Oberbegriff des Anspruchs 1. Das Vermessungsgerät weist eine Rotationseinheit mit einem Umlenkelement, zum Umlenken eines Sendelichtstrahls und eines Empfangslichtstrahls, und einen Rotationskörper auf.

Vermessungsgeräte oder Scanner der eingangs genannten Art sind dazu ausgebildet, einen Raumbereich und/oder ein Objekt dreidimensional zu vermessen. Typische Anwendungen sind beispielsweise die Vermessung von Innenräumen, wie Kirchen und Werkhallen, von grossen Objekten, wie Gebäuden oder Flugzeugen, oder auch die forensische Vermessung eines Unfallortes.

Zur Vermessung dieser Objekte wird mittels eines Laserscanners ein vordefiniertes Raumvolumen mit einem Laserstrahl abgetastet und das von dem Objekt reflektierte Laserlicht detektiert, wobei für jeden Zeitpunkt die Winkelinformationen für die Richtung des ausgesandten Laserstrahls und des detektierten Laserlichts erfasst werden. Über das detektierte Laserlicht lässt sich durch Triangulation und/oder Laufzeitmessung bzw. Phasenverschiebung die Distanz zwischen einem im Raumvolumen befindlichen Oberflächenpunkt und dem Messgerät bestimmen. Zusammen mit den zu diesem Oberflächenpunkt gehörenden Winkelinformationen kann die räumliche Position dieses Oberflächenpunkts errechnet werden. Aus der Folge von derart aufgenommenen Messpunkten bzw. den daraus errechneten Positionen im Raum wird mit einer entsprechenden Software ein dreidimensionales Modell der gescannten Oberfläche, des Objekts oder der gescannten Umgebung generiert, z.B. in Form einer dreidimensionalen Punktwolke.

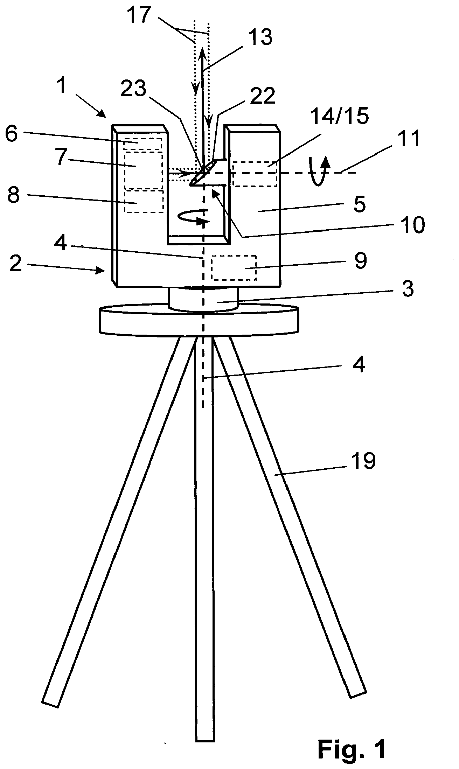

Als Laserscanner ausgebildete Vorrichtungen zum optischen Abtasten einer Umgebung, wie eines gemäß Stand der Technik in Figur 1 beispielhaft dargestellt ist, umfassen üblicherweise einen Messkopf 2, in dessen Gehäuse 5 auf einer Seite eine Strahlungsquelle 6 zur Generierung eines Sendelichtstrahls 13 und ein Detektor 8 zum Empfang des von Objekten der Umgebung reflektierten Sendelichtstrahls 13, kurz Empfangslichtstrahl 17 oder Reflexionsstrahlung genannt, untergebracht ist. Dabei wird unter "Reflexionsstrahlung" auch von Objekten der Umgebung in Richtung des Vermessungsgerätes gestreute Sendelichtstrahlung verstanden, was beispielsweise besonders bei Objekten mit einer sehr rauen Oberfläche oder beispielsweise auch bei Laubbäumen vorkommt.

Des Weiteren sind in dem Gehäuse 5 optische Komponenten 7 zur Kollimation und Umleitung des Sendelichtstrahls 13 und der Reflexionsstrahlung 17 untergebracht. Der Messkopf 2 bzw. das Gehäuse 5 sind auf einer Basis 3 drehbar um eine Basisachse 4 gelagert, die in der Regel einen Adapter für die Fixierung auf einem Stativ 19 oder anderem Träger aufweist. Der Messkopf 2 bzw. das Gehäuse 5 sind in der Regel von Hand und/oder motorgetrieben und durch eine Steuereinheit 9 kontrolliert um Basisachse 4 drehbar. Auf einer der Strahlenquelle 6, dem Detektor 8 und den optischen Komponenten 7 gegenüberliegenden Seite des Gehäuses 5 ist im Gehäuse 5 eine Rotationseinheit 10 mit einem Umlenkelement 22 abgestützt, mittels derer der Sendelichtstrahl 13 kontrolliert, ausgerichtet in die Umgebung ausgesandt und die Reflexionsstrahlung 17 eingefangen wird. Hierzu ist die Rotationseinheit 10 mit dem Umlenkelement 22 mittels eines Motors 15 angetrieben um eine Rotationsachse 11 drehbar im Gehäuse 5 gelagert. Die Rotationsachse 11 steht senkrecht auf der Basisachse 4, und das Umlenkelement 22 ist in der Regel um einen Neigungswinkel von 45° gegenüber der Rotationsachse 11 geneigt angeordnet. Der Schnittpunkt von Basisachse 4 und Rotationsachse 11 entspricht in der Regel dem Auftreffpunkt des gebündelten Sendelichtstrahls 13 auf dem Umlenkelement 22, der auch als Umlenkpunkt 23 bezeichnet wird. Durch Drehung des Messkopfes 2 um die Basisachse 4 und Rotation der Rotationseinheit 10 um die Rotationsachse 11 ist es möglich, einen dreidimensionalen Scan durchzuführen.

EP1906141 offenbart einen Laserscanner mit einem flachen Spiegel als Umlenkmittel. Der Spiegel ist als rechteckige Spiegelplatte ausgebildet, die eine erste Längsachse und ein zweite Längsachse aufweist, die in der Ebene der Spiegelplatte liegen und einander in der Mitte der Spiegelplatte kreuzen. Die Spiegelplatte ist auf einem Gestell um die zweite, auch als Drehachse bezeichnete Längsachse der Spiegelplatte drehbar gelagert. Mittels eines ebenfalls an dem Gestell angeordneter Motors und eines zugehörigen Getriebes ist die Spiegelplatte um die Drehachse motorgetrieben verschwenkbar. Die Spiegelplatte ist auf mindestens einer Seite mit einer spiegelnden Oberfläche versehen, während auf der anderen Seite mittig ein Zielelement in Form eines Hohlzylinders aufgebracht ist. Der Hohlzylinder ist mit seiner Zylinderachse parallel mit jener der beiden Längsachsen der Spiegelplatte ausgerichtet ist, die die Drehachse der Spiegelplatte kreuzt, wobei seine Zylinderachse in einem Abstand zur Oberfläche der Spiegelplatte befindet, der dem Aussenradius des Holzylinders entspricht. Er erststreckt sich über die gesamte Länge der Spiegelplatte und enthält optische Elemente wie Linsen etc.. Das Gestell, in dem die Spiegelplatte drehbar gelagert ist, ist in einem transparenten Gehäuse angeordnet welches fix mit einem zweiten Gehäuse verbunden ist. Dieses zweite Gehäuse ist auf einer Basis um eine Basisachse drehbar gelagert, wobei die Basisachse den Schnittpunkt von Drehachse und Längsachse der Spiegelplatte schneidet und auf der Drehachse senkrecht steht. In dem zweiten Gehäuse sind Laserquelle, Detektor und optische Elemente so angeordnet, dass die Einstrahlrichtung des Sendelichtstrahls parallel zur Basisachse aber senkrecht zur Drehachse der Spiegelplatte ausgerichtet ist.

EP1517415A1 zeigt ein Tachymeter mit einem um eine vertikale Stehachse rotierbar gelagerten Messkopf, in welchem ein um eine horizontale Kippachse verschwenkbares Gehäuse gelagert ist. Das Gehäuse ist im Wesentlichen als flacher Quader ausgestaltet, den in einer ersten Längsrichtung etwa mittig eine zylindrische Öffnung durchdringt. In der zylindrischen Öffnung sind optische Elemente, wie beispielsweise Linsen angeordnet. Sie dient als Zielelement zum Anviesieren eines Ziels. Die vertikale Stehachse und die horizontale Kippachse stehen jeweils senkrecht auf der Zylinderachse dieser zylindrischen Öffnung. Das Gehäuse umfasst des Weiteren eine Distanzmesseinheit und eine Laserstrahlungsquelle. Für Distanzmessungen wird der Laserstrahl in den optischen Pfad des Zielelements eingekoppelt und via die zylindrische, durchgehende Öffnung auf ein Ziel ausgesendet. Von dem Ziel reflektiere Messstrahlung wird umgekehrt via das Zielelement, also via die zylindrische, durchgehende Öffnung, aufgenommen und aus dem optischen Pfad des Zielelements ausgekoppelt und auf die Distanzmesseinheit umgelenkt wird. Da Zielelement, Distanzmesseinheit und Laserstrahlungsquelle alle gemeinsam in dem Gehäuse gelagert sind, sind diese jeweils nur gemeinsam sowohl um die Stehachse als auch um die horizontale Kippachse drehbar bzw. verschwenkbar.

Aufgrund seines komplexen internen opto-mechanischen Aufbaus und der Anordnung der Laserstrahlelemente ist die Kalibrierung eines Scanners gemäß Stand der Technik recht anspruchsvoll. Das lokale, instrumentengebundene Koordinatensystem eines Scanners wird durch Parameter wie Winkelabweichungen und Offsets der Dreh- und Zielachsen beschrieben. Wichtige Kalibrierungsparameter sind: Kippachsenschiefe, der horizontale und der vertikale Fehlwinkel der Laserzielrichtung, der Winkelfehler und die Position des Umlenkelements bzw. Drehspiegels, die Schiefe der Drehachse (hier in der Regel als Rotationsachse bezeichnet) zur Stehachse (hier in der Regel als Basisachse bezeichnet), etc.. Die Bestimmung dieser Parameter wird daher bis anhin initial vor der Auslieferung des Geräts durch eine Werkskalibrierung ermittelt, die beispielsweise auf einer 2-Lagen-Messung beruhen kann, wie sie in EP 2 523 017 A1 beschrieben ist.

Eine schnelle, effiziente Feldkalibrierung, die dem Nutzer des Geräts die Bestimmung der aktuellen Parameter vor Ort erlauben würde, ist bisher nicht möglich. Zum einen setzt eine schnelle effiziente Feldkalibrierung eine präzise Visiereinrichtung voraus, die nicht in jedem Scanner zur Verfügung steht und zum anderen sind die aus der Literatur bekannten Anleitungen und mathematische Modelle zur Kalibrierung mit nur einem Datensatz einer 2-Lagen-Messung aus einer einzigen Instrumentenaufstellung (Schnelligkeit und Effizienz der Kalibrierung!) meist für Geräteaufbauten gegeben, die mit dem realisierten opto-mechanischen Aufbau des vorliegenden Scanners nicht übereinstimmen, so dass sie zur präzisen Bestimmung des Koordinatensystems des gegebenen Scanners unbrauchbar sind. Sind die Koordinaten von Referenzpunkten vorher nicht bekannt und ist nur ein Datensatz einer 2-Lagen-Messung aus einer einzigen Instrumentenaufstellung vorhanden, so können mit den in der Literatur gegebenen Modellen die gewünschten Parameter nicht bestimmt werden. Denn, wenn keine Lageinformationen der Referenz- bzw. Zielpunkte bekannt sind, dann wird das Ausgleichsproblem bei der Auswertung eines Datensatzes aus einer 2-Lagen-Messung singular, und die Kalibrierparameter sind nicht vollständig bestimmbar.

Um mittels eines gattungsgemässen Vermessungsgerätes ein Ziel anvisieren zu können, sind aus dem Stand der Technik verschiedene Visiereinrichtungen bekannt, wie beispielsweise eine in das Gehäuse des Messkopfes auf der Seite der Laserlichtquelle integrierte Kamera. Von dieser Kamera erfasste Bilder können zum Anvisieren insbesondere als Live-Bild auf einem Display dargestellt werden. Nachteilig an solchermassen ausgebildeten Vermessungsgeräten ist oftmals die Komplexität ihrer Bedienung. Der Aufbau solcher Vermessungsgeräte, insbesondere für die verwendete Optik, ist zudem teuer. Die notwendigerweise durch eine Kamera, welche eine zusätzliche Stromversorgung benötigt, aufgenommenen Bilder müssen zudem durch eine entsprechende Software bearbeitet werden. Weiter ist für den Anzielvorgang eine Steuer- und Auswertevorrichtung notwendig.
Als alternative Form der Bereitstellung des Live-Bildes ist aus der europäischen Patentanmeldung EP 12153163.6 der Anmelderin ein Okular bekannt, das ebenfalls im Gehäuse des Messkopfes auf Seite der Kamera und der Laserlichtquelle angeordnet ist und insbesondere mit einer die Emissionsrichtung anzeigenden Zielmarkierung, z.B. in Form eines Fadenkreuzes, ausgestattet ist. Aus dieser Anmeldung ist auch ein Abbildungssystem mit einer Abbildungsoptik und einem Display zur graphischen Bereitstellung einer Abbildung als Live-Bild bekannt. Die Auswahl des Scannbereiches erfolgt nach einer dem Stand der Technik entsprechenden Methode, indem ein Overview-Scan und anschliessend ein entsprechendes Overview-Bild gefertigt werden. Der Benutzer wählt dann anhand des durch den Overview-Scan erzeugten Bildes den zu scannenden Bereich aus, der dann durch einen Feinscan abgetastet und im Einzelnen vermessen wird.

Ebenfalls mit einer Kamera als Zieleinrichtung arbeitet das in EP2 620 746 offenbarte Vermessungsgerät. Die Kamera ist hier auf der Aussenseite des Rotationskörpers angebracht und rotiert mit dem Rotationskörper mit. Der Rotationskörper ist in jenem Bereich, der zur Zieleinrichtung gehört, als zylindrischer Holkörper ausgebildet der in seiner Zylinderwand zwei Öffnungen aufweist. Auf einer dieser Öffnungen ist die Kamera mit ihrer Optik und mit Blick in das Innere des Hohlzylinders angeordnet. Durch ein Umlenkmittel im Hohlzylinder wird der optische Pfad der Kamera und also der Zieleinrichtung in Achsrichtung des zylindrischen Hohlkörpers umgelenkt, so dass die Blickrichtung nun in Längsrichtung des Hohlzylinders gerichtet ist und auf die Rückseite einer Strahlumlenkeinheit. Die Rückseite der Strahlumlenkeinheit dient als weiteres Umlenkmittel, an dem der optische Pfad der Zieleinrichtung/Kamera ein weiteres Mal umgelenkt wird, und zwar aus dem Hohlzylinder hinaus durch der zweiten, dem Strahlumlenkmittel gegenüberliegende Öffnung in der Hohlzylinderwand in die Umgebung. Die Zieleinrichtung besitzt damit einen optischen Pfad, der zweimal abgelenkt ist. Das resultierende Sichtfeld der Zieleinrichtung in diesem Vermessungsgerät ist gegenüber der Blickrichtung der Kamera der Zieleinrichtung _versetzt und weist eine Ausrichtung auf die bzgl. der Ablenkrichtung des Messstrahls um 180° verdreht ist.

Der Erfindung liegt die Aufgabe zugrunde, eine Alternative zu den vorgenannten Vermessungsgeräten bereitzustellen.

Dieses alternative Vermessungsgerät soll vor allem weniger komplex im Aufbau und in der Bedienung, kostengünstiger und robuster sein.

Dazu soll es flexibler, also besser angepasst auf die jeweiligen Vermessungsbedürfnisse einsetzbar sein und beispielsweise eine Schnellkalibrierung vor Ort ermöglichen.

Wenigstens eine dieser Aufgaben wird durch ein Vermessungsgerät gemäss dem unabhängigen Anspruch gelöst.

Merkmale, welche die Erfindung in alternativer oder vorteilhafter Weise weiterbilden, sind den abhängigen Ansprüchen zu entnehmen.

Ein erfindungsgemässes Vermessungsgerät, das insbesondere als Laserscanner ausgebildet ist und dem optischen Vermessen einer Umgebung dient, weist einen drehbar gelagerten Messkopf sowie eine im Messkopf integrierte Strahlungsquelle zur Erzeugung eines Sendelichtstrahls, einen im Messkopf integrierten Empfangssensor zum detektieren von als Empfangsstrahlung zurückkommender, reflektierter Sendelichtstrahlung und eine im Messkopf gelagerte Rotationseinheit auf. Die Rotationseinheit umfasst einen wenigstens einseitig um seine Rotationsachse drehbar gelagerten Rotationskörper mit einem Umlenkelement zum ausgerichteten Umlenken des Sendelichtstrahls in die Umgebung und Einfangen und Umlenken des Empfangslichtstrahls. Erfindungsgemäss ist in den Rotationskörper ein Zielelement integriert, das eine durch den Rotationskörper hindurchgehende Öffnung umfasst. Die durchgehende Öffnung erlaubt es, den Rotationskörper als tragende Struktur für das Zielelement zu verwenden.

Durch die durchgehende Öffnung im Rotationskörper kann hindurchgesehen und ein Ziel anvisiert werden. Die Drehbarkeit des Rotationskörpers um die Rotationsachse und die Drehbarkeit des den Rotationskörper tragenden Messkopfes um die Basisachse erlauben es, das Zielelement leicht auf ein gewünschtes Ziel auszurichten. Die Anordnung der durchgehenden Öffnung bzw. des Zielelements gegenüber des am Umlenkelement umgelenkten und ausgerichtet ausgesandten Sendelichtstrahls ist über die bekanntermassen vorhandenen Winkelencoder genau bekannt. Daher ist auch die Ausrichtung des Sichtfeldes des Zielelements im Verhältnis zur Ausrichtung des vom Umlenkpunkt aus ausgesandten Sendelichtstrahls genau bekannt und kann vom Benutzer berücksichtigt werden, wenn er nach dem Anvisieren des Ziels mittels Zielelement den Laserstrahl des Vermessungsgerätes auf dieses Ziel einstellen will.

In einer vorteilhaften Ausgestaltung lassen sich in das Zielelement eine Optik und/oder eine Zielmarkierung integrieren.

Die Optik kann derart ausgestaltet sein, dass sie eine 10-fache oder eine 30 fache oder höhere Vergrösserung oder variabel eine z.B. bis 30-fache Vergrösserung erlaubt und auf diese Weise ein genaues Anvisieren des Ziels vereinfacht. Das Zielelement ist dann also in Form eines Fernrohrs ausgebildet, wobei dies in Form eines Galilei-Fernrohrs oder in Form eines Keppler-Fernrohrs ausgeführt sein kann.

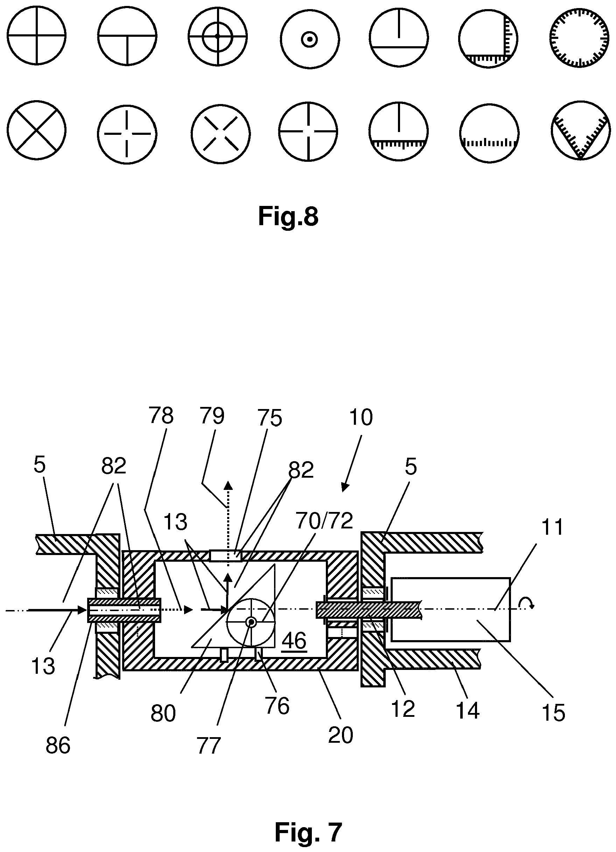

Die Zielmarkierung hilft in bekannter Weise beim genauen Anvisieren eines Ziels und kann als Diopter ausgestaltet sein, also als virtuelle Projektion in den Objektraum, oder in bekannter Weise real in Form von Farbmarkierungen, gespannten Fäden etc. ausgeführt sein. In beiden Fällen sind angepasst an die jeweiligen Anforderungen Zielmarkierungen von den traditionellen Typen des Fadenkreuzes bis zu skalierten Strichmarkierungen möglich. Beispiele hierzu sind in Fig. 8 abgebildet.

In Kombination bilden die in das Zielelement integrierte Vergrösserungs-Optik und die Zielmarkierung ein in den Rotationsträger integriertes Zielfernrohr.

Da sich das Zielelement ausserhalb des Strahlenganges des Sendelichtstrahls befindet, ist der Aufbau des Gerätes sehr einfach und robust. Es wird keine spezielle Optik benötigt, die ein Aus- bzw. Einkoppeln des Sendelichtstrahls und/oder des Empfangslichtstrahls in den Strahlengang des Zielelements oder umgekehrt die Verquickung des Sichtfeldes des Zielelements mit dem Strahlengang der Strahlen ermöglicht. Um ein Ziel anzuvisieren, wird keine Software, Hardware, elektrische Energie oder Rechenzeit benötigt. Das gesamte Vermessungsgerät kann zudem kompakter gebaut werden, da im Gehäuse kein Platz für eine Kamera oder für ein Display benötigt wird.

Dennoch ist es natürlich möglich das Vermessungsgerät mit einer Softwareunterstützung für den Benutzer auszurüsten. So kann im Vermessungsgerät eine Steuereinheit vorgesehen sein, die mittels einer Software derart konfiguriert ist, dass Raumkoordinaten eines mit Hilfe des Zielelements anvisierten Ziels erfassbar und speicherbar sind. Die Steuereinheit kann ferner mittels Software derart konfiguriert sein, dass Motoren zum Verdrehen von Rotationskörper und/oder Messkopf derart steuerbar sind, dass der Sendelichtstrahlstrahl auf dieses Ziel ausrichtbar ist. Die Steuereinheit kann mittels Software auch derart konfiguriert sein, dass die Motoren zum Verdrehen von Messkopf und/oder Rotationskörper so ansteuerbar sind, dass das im Rotationskörper integrierte Zielelement auf vorbestimmte Koordinaten ausrichtbar ist.

Besonders einfach ist die Ausrichtung des Sendelichtstrahls auf das anvisierte Ziel, wenn das Zielelement bzw. die durchgehende Öffnung im Rotationskörper in einem definierten Winkel zu dem auf dem Umlenkelement in einem Umlenkpunkt auftreffenden Sendelichtstrahl angeordnet ist, insbesondere in einem Winkel von 90° zur Rotationsachse.

Ist das Umlenkelement in einem Winkel von 45° zur Rotationsachse und zur Basisachse ausgerichtet und wird der Sendelichtstrahl am Umlenkelement in einem Umlenkpunkt umgelenkt, der dem Schnittpunkt der Rotationsachse und der Basisachse entspricht, ist es besonders vorteilhaft das Zielelement bzw. die durchgehende Öffnung im Rotationskörper in einem Winkel von 90° zur Rotations- und/oder zur Basisachse anzuordnen.

Durch den Einbau des Zielelements in Messrichtung ist eine Anzielhilfe realisierbar, welche den Anzielvorgang des Benutzers von einer Stromquelle und etwa einer Software unabhängig macht, die kostengünstiger ist und eine einfachere Bedienung ermöglicht. Der Zeitaufwand für die Anpeilung eines zu vermessenden Zielpunktes kann verringert werden. Es sind Einzelpunktmessungen mit geringem Aufwand möglich und ein zu vermessender Bereich kann einfach durch Anpeilen von drei oder vier Eckpunkten - wenn nötig auch einigen mehr - definiert werden und anschliessend mit einem Feinscan vermessen werden.
Mit dem erfindungsgemässen Vermessungsgerät können aber erstmals auch wirkliche 2-Lagen-Messungen zur Kalibrierung des Gerätes durchgeführt werden, wie sie beispielsweise in EP 2 523 017 A1 beschrieben sind. Da das in die Rotationseinheit integrierte Zielelement mit dieser mitrotiert, können sowohl Fehler in der Horizotalkollimation und im Vertikalindex als auch die Bestimmung der Kippachsschiefe automatisiert bestimmt und die Ausrichtung des Zielelements zum Achssystem des Messinstrumentes kalibriert werden (hier stehen Kippachse und Rotationsachse synonym füreinander). Hierfür wird ein Zielpunkt, vorzugsweise kooperativer Zielpunkt wie beispielsweise ein Reflektor, mit dem Zielelement ein erstes Mal anvisiert und die zu dieser Peilung gehörenden Winkel von Rotationsachse und Basisachse als erste Winkellage gespeichert. Das Gehäuse wird anschliessend 180° um die Basisachse gedreht und das Zielelement in der Rotationseinheit etwa um 180° um die Rotationsachse; der Zielpunkt wird ein zweites Mal mit dem Zielelement anvisiert und die zu dieser Peilung gehörende zweite Winkellage aufgenommen und gespeichert. Die so erhaltenen Winkellagen werden entsprechend in Beziehung zueinander gesetzt und verglichen. Bei diesem Vergleich sich ergebende Abweichungen können für die Bestimmung von Abweichungen der Rotationsachse und der Basisachse aus der Horizontalen bzw. Vertikalen und zur Kalibrierung des Geräts bzw. des Zielelements genutzt werden. Mit dem kalibrierten Zielelement kann dann die Lage des Laserstrahls der Scaneinheit in Bezug zum Achssystem kalibriert werden, indem das gleiche Prozedere mit dem Laser durchgeführt wird, nämlich: Anvisieren des Zielpunktes mit dem Laser und Speichern der ersten Laser-Winkelllage; Drehen des Gehäuses 180° um die Basisachse und der Rotationseinheit etwa um 180° um die Rotationsachse; genaues Ausrichten des Laserstrahls auf den Zielpunkt und registrieren und Speichern der zweiten Laser-Winkellage; Vergleichen der Laser-Winkelllagen miteinander und mit den Winkellagen des Zielelements. Die sich aus dem Vergleich der Laser-Winkelllagen mit den Winkellagen des Zielelements ergebenden Abweichungen können für eine Kalibrierung des Lasers genutzt werden.

Mit dem in der Rotationseinheit des Scanners untergebrachten optischen Zielelement ist der opto-mechanische Aufbau des Vermessungsgeräts viel einfacher. Eine Kalibrierung ist daher neu auch gestützt auf einem einzigen Datensatz einer 2-Lagen-Messung und basierend auf frei gewählte Zielpunkten durchgeführt werden, ohne dass deren absolute oder relative Koordinaten bekannt sein müssen. Das zur Bestimmung der Kalibrierparameter zugeordnete Ausgleichsproblem ist regulär und damit lösbar, so dass der Nutzer des erfindungsgemäßen Geräts nun neu die Möglichkeit hat, alle nötigen Parameter mit ausreichender Genauigkeit selbst zu bestimmen, und zwar jederzeit und auch vor Ort, im Feld. Er hat also auch die Möglichkeit die Parameter zu überprüfen und gegebenenfalls neu zu bestimmen, wenn sich bei Feldgebrauch Änderungen der Parameter ergeben beispielsweise aufgrund von Witterungseinflüssen (Änderung von Temperatur und/oder Feuchtigkeit etc.) oder bei Einsatz des Geräts über eine längere Zeitspanne (Geräteerwärmung).

Das Zielelement kann somit nicht nur als eine sehr genaue Anzielhilfe vorbereitend für einen Scan sondern auch in einer theodoliten-ähnlichen Funktion genutzt werden. Dieser Vorteil kann für einfachere und genauere 2-Lagen-Messung und somit für eine schnellere, effizientere und präzisere Kalibrierung des Vermessungsgeräts genutzt werden, insbesondere bezüglich Zielachsenfehlern in Azimutrichtung und Stehachsrichtung, Kippachsschiefe, Spiegelfehler und Laserstrahlausrichtung, wobei hier auch Hilfsmittel zum Einsatz kommen können, wie sie für Theodoliten bekannt sind. Außerdem ermöglicht dies auch Anschlussmessungen die eine freie Stationierung des Vermessungsgerätes erlauben.

Bei Einbau des Zielelements in Messrichtung - also koaxial zur Basisachse und mit halbdurchlässigen Umlenkelement - kann zur Sicherung (Augenschutz) das Zielelement mit einem Verschluss versehen sein, der mit einer Steuerung für den Laser gekoppelt ist. Die Sicherheitssteuerung arbeitet so, dass der Verschluss immer geschlossen ist, wenn Laserlicht aus dem Gehäuse in Richtung Umlenkelement austritt, so dass während des Laserbetriebs nicht durch das Zielelement hindurch gesehen werden kann. Die Sicherheitssteuerung kann aber auch alternative oder zusätzlich mit einem Shutter im Strahlengang des Laserstrahls ausgerüstet sein und so arbeiten, dass das Aussenden von Laserlicht jeweils durch Schließen des Shutters verhindert wird, wenn der Verschluss im Zielelement geöffnet wird.

Eine solche Sicherung kann natürlich auch bei allen anderen hier vorgestellten Varianten des erfindungsgemäßen Vermessungsgerätes vorgesehen sein, nicht nur, wenn das Zielelement koaxial mit der Basisachse und senkrecht zur Rotationsachse ausgerichtet ist.

Weist die Messstrahlung zusätzlich einen für das menschliche Auge sichtbaren Lichtanteil auf, der von dem halbdurchlässigen Spiegel durchgelassen wird, während die anderen für die Messung wesentlichen Strahlungsanteile der Empfangsstrahlung ins Gehäuse auf den Detektor umgeleitet werden, so wird das Anzielen mit einem koaxial zur Strahlrichtung angeordneten Zielelement noch einfacher.

In einer vorteilhaften Ausgestaltung, umfasst das Zielelement eine Röhre, die in die durchgehende Öffnung in den Rotationskörper eingeschoben werden kann. In diese Röhre kann im Sinne eines Fernrohres oder Zielfernrohres vorteilhaft vor der Montage in den Rotationskörper eine Optik und/oder eine Zielmarkierung integriert werden. Die Integration dieser Elemente vor der Montage vereinfacht die Produktion. Auch kann das Vermessungsgerät mit verschiedenen auswechselbaren Röhren geliefert werden, wobei die Röhren dann für die unterschiedlichen Bedürfnisse mit einer Zielmarkierung und/oder mit verschiedenen Optiken unterschiedlicher Vergrösserung (verschiedene Fernrohrtypen) ausgestattet sind. Im oder am Rotationskörper sind dann vorteilhafterweise Befestigungsmechanismen für die lösbare Fixierung der austauschbaren Röhren vorgesehen. Dies können Klemmmechanismen, Schnappmechanismen, Verschraubungen etc. sein.

In einer weiteren, vorteilhaften Ausgestaltung sind der Rotationskörper und/oder der Messkopf zur Zielausrichtung händisch drehbar.

Unabhängig von der Ausgestaltung des Rotationskörpers und des für ihn verwendeten Materials ist es immer möglich, ein Zielelement, das eine durchgehende Öffnung im Rotationskörper umfasst, in den Rotationskörper zu integrieren.

So kann der Rotationskörper zum Beispiel vorteilhafterweise aus einem leichten Material, insbesondere aus einem Kunststoff, einem faserverstärkten Kunststoff oder einem Leichtmetall, wie Aluminium oder einer Aluminiumlegierung gefertigt sein oder aus einer Mischung solcher leichter Werkstoffe. Die Verwendung eines Materials mit geringem spezifischem Gewicht reduziert den Energieverbrauch beim Scannen und reduziert Messfehler, die ansonsten aufgrund von Biegephänomenen auftreten, welche auf das Eigengewicht des Rotationskörpers zurückzuführen sind.

Der Rotationskörper kann als massiver Körper ausgebildet sein. Wenn er zudem aus einem glänzenden Metall massiv gefertigt ist, kann das Umlenkelement einstückig mit dem Rotationskörper durch Hochglanzpolieren (nm) des abgeschrägten freien Endes des Rotationskörpers gebildet sein.

Alternativ hierzu ist es möglich den Rotationskörper in einer Leichtbaustruktur mit Materialaussparungen zu fertigen, welche Gewichts- und Materialeinsparungen erlauben und so zur Kostenreduktion beitragen.

Vorteilhafterweise kann der Rotationskörper aber auch als Hohlzylinder ausgebildet sein. Dann ist es besonders sinnvoll, wenn das Zielelement eine einschiebbare Röhre oder mehrere gegeneinander austauschbare Röhren (Fernrohrtypen) umfasst, welche einen flexiblen Einsatz etwa mit unterschiedlichen Optiken und/oder einem Zielmarkierung erlauben.

Um gezielt einzelne Punkte der Umgebung mit dem Vermessungsgerät anzielen zu können, ist im Gehäuse des Vermessungsgerätes vorteilhaft ein Verstellmechanismus vorgesehen, mit dem die Rotationseinheit motorisch ausrichtbar ist. Für die motorische Ausrichtung ist eine Recheneinheit mit einer entsprechenden Software vorgesehen.

In einer Ausführungsform ist der Rotationskörper einseitig rotierbar gelagert und weist entgegengesetzt zu Lagerseite ein abgeschrägtes, freies Ende auf, wobei das Umlenkelement an dem abgeschrägten, freien Ende vorgesehen ist.

In einer weiteren besonderen Ausführungsform ist der Rotationskörper zweiseitig rotierbar gelagert, das Umlenkelement ist im Rotationskörper integriert und der Rotationskörper weist einen Passierweg auf, auf dem Sendelichtstrahl und Empfangslichtstrahl zum Umlenkelement und vom Umlenkelement weg leitbar sind. Dies hat den Vorteil, dass der Rotationskörper und somit auch das Umlenkelement besser gelagert sind, weniger stark Biegephänomenen ausgesetzt ist und somit die Messung präziser ausführbar ist.

Besonders vorteilhaft, insbesondere für zweiseitig gelagerte Rotationskörper ist das Umlenkelement als ein dreidimensionales optisches Bauelement ausgebildet und zwar insbesondere als ein Prisma. Das optische Bauelement bzw. das Prisma ist im Rotationskörper integriert und in einer Durchblickrichtung für das sichtbare Licht transparent, wobei die Durchblickrichtung von einer Einstrahlrichtung, in welcher der Sendelichtstrahl auf das Umlenkelement trifft, abweicht, und das Umlenkelement derart im Rotationskörper integriert ist, dass man beim Blicken durch die durch den Rotationskörper hindurchgehende Öffnung des Zielelements in Durchblickrichtung durch das optische Bauelement blickt. Erfindungsgemäß weicht die Durchblickrichtung von der Einstrahlrichtung und von einer Ablenkrichtung, unter welcher der Sendestrahl von dem Umlenkelement in die Umgebung gesandt wird, ab, wobei die Durchblickrichtung die Einstrahlrichtung und die Ablenkrichtung senkrecht aufeinander stehen.

Unabhängig von der Detailausgestaltung ist es natürlich vorteilhaft wenn das optische Bauelement bzw. Prisma in Durchblickrichtung mit einer Optik und/oder mit einer Zielmarkierung versehen ist. Hierzu können Optik und/oder Zielmarkierung beispielsweise einblickseitig und/oder ausblickseitig auf das optische Bauelement bzw. Prisma aufgeklebt sein oder mittels einer lösbaren Verbindung, wie Klemmmechanismus oder Schraubverbindung mit diesem verbunden sein. Die Zielmarkierung kann aber beispielsweise in Form von Farbe, feinen Drähten oder Fäden appliziert sein.
Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Gleiche Elemente in den Figuren sind mit gleichen Bezugszeichen versehen. Im Einzelnen zeigen die Figuren rein schematisch:
- Fig. 1: ein als Laserscanner ausgebildetes Vermessungsgerät zum optischen, vermessenden Abtasten der Umgebung, montiert auf einem Stativ gemäss Stand der Technik;
- Fig. 2: eine erste Ausführungsform eines erfindungsgemässen Vermessungsgeräts ohne Stativ;
- Fig. 3: die erfindungsgemässe Rotationseinheit aus dem erfindungsgemässen Vermessungsgerät der Figur 2 im Längsschnitt;
- Fig. 4a: eine alternative Ausführungsform der erfindungsgemässen Rotationseinheit im Längsschnitt;
- Fig. 4b: eine weitere Ausführungsformen der Rotationseinheit im Längsschnitt;
- Fig. 5a: eine weitere Ausführungsform der erfindungsgemässen Rotationseinheit im Längsschnitt;
- Fig. 5b: schematisch die Rotationseinheit aus Figur 5a im Blick auf die Stirnseite ohne das Umlenkelement;
- Fig. 6a: noch eine Ausführungsform der erfindungsgemässen Rotationseinheit im Längsschnitt;
- Fig. 6b: in gleicher Darstellung wie Figur 5b, die erfindungsgemässe Rotationseinheit aus Figur 6a; und
- Fig. 7: einen Ausschnitt des Vermessungsgerätes mit einer weiteren Ausführungsform einer erfindungsgemässen Rotationseinheit im analoger Darstellung zu Figur 3.

Figur 1 zeigt ein Vermessungsgerät gemäss Stand der Technik, wie es oben bereits näher beschrieben wurde.

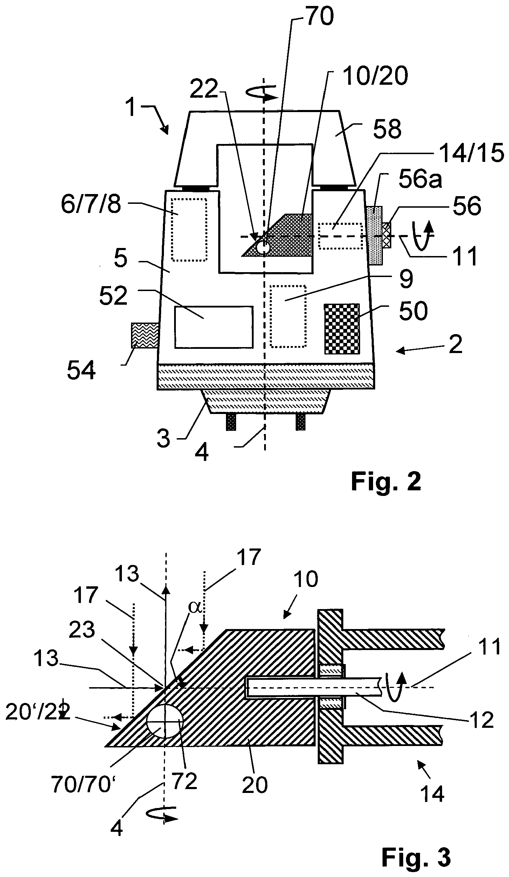

Figur 2 zeigt eine erste Ausführungsform eines erfindungsgemässen Vermessungsgeräts 1 mit einer erfindungsgemäss ausgebildeten Rotationseinheit 10, die in Figur 3 im Detail gezeigt ist. Das Vermessungsgerät 1 ist, wie üblich, mit einem Messkopf 2 ausgestattet, dessen Gehäuse 5 auf einer Basis 3 um eine Basisachse 4 drehbar gelagert ist. Im Gehäuse 5 sind eine Strahlungsquelle 6 zur Erzeugung des Sendelichtstrahls 13 und ein Empfangssensor 8 zur Detektierung eingefangener und vorzugsweise an einem Zielobjekt reflektierter Reflexionsstrahlung 17 vorgesehen, sowie optische Komponenten 7 für die Strahlleitung und Kollimierung der Sendelichtstrahlung 13 und Reflexionsstrahlung 17. Die Rotationseinheit 10, welche ein Strahlumlenkelement 22 zur gezielten Ablenkung der Sendelichtstrahls 13 und zum Einfangen des Empfangslichtstrahls 17 aufweist, ist angetrieben durch einen Motor 15, rotierbar um eine Rotationsachse 11 gelagert. Der Motor 15 ist seinerseits in einem Motorengehäuse 14 gelagert innerhalb des Gehäuses 5 des Messkopfes 2. Das Umlenkelement 22 der Rotationseinheit 10 ist um einen Winkel α gegenüber der Rotationsachse 11 geneigt, der üblicherweise 45° beträgt.

In dem hier gezeigten Beispiel umfasst die Rotationseinheit 10 einen massiven Rotationskörper 20 aus Metall, dessen Stirnseite 20' feinst poliert ist (µm) und als Umlenkelement 22 dient.

Im Rotationskörper 20 befindet sich eine durchgehende Öffnung 70', die als Zielelement 70 dient und, in welcher eine Zielmarkierung 72, fixiert ist (siehe Figur 3). Das in die Rotationskörper 20 integrierte Zielelement 70 rotiert bei Drehung der Rotationskörpers 22 um dessen Rotationsachse 11 mit.

Das Anpeilen eines Zielobjekts kann manuell durch eine Drehung des Messkopfes 2 um die Basisachse 4 per Hand oder mittels eines Verstelldrehknopfes 54 geschehen, der entweder direkt oder mittels einer entsprechenden Motorisierung (nicht dargestellt) auf einen Verstellmechanismus (nicht dargestellt) einwirkt. Hierzu kann Steuereinheit 9 mit entsprechender Software vorgesehen sein. In analoger Weise kann für die Ausrichtung auf ein Zielobjekt der Rotationskörper 20 mit dem Umlenkelement 22 mittels eines zweiten Verstelldrehknopfes 56 manuell um die Rotationsachse 11 verdreht werden. Der Verstelldrehknopf 56 wirkt dabei mit einem Grobtrieb zusammen, wobei auch hier zusätzlich Motoren für eine gesteuerte motorisierte Rotation der Rotationseinheit 10 vorgesehen sind. Ferner kann eine hochpräzise manuelle Ausrichtung des Rotationskörpers 20 mittels eines weiteren Feinverstelldrehknopfes 56a oder Steuertasters, welcher mit einem Feinverstellmechanismus verbunden ist, erfolgen. Beim Betätigen des Drehknopfes 56a wird der Rotationskörper 20 mit einer bestimmten Drehübersetzung mitgedreht. Mittels eines elektronischen Gebers kann das Übersetzungsverhältnis auch adaptiv ausgelegt sein, beispielsweise, indem eine Drehbewegung umso langsamer erfolgt, je grösser die Drehübersetzung wird. Durch die so bereitgestellte Ausrichtbarkeit des Rotationskörpers 20 kann das Zielelement 70 sowohl manuell als auch automatisch gesteuert (mittels der mit den jeweiligen Antriebswellen verbundenen Motoren und entsprechender Software) sehr genau auf ein Ziel ausgerichtet werden.

Ein Bedienfeld 50 ist in diesem Beispiel für manuelle Eingaben am Gerät vorgesehen, welche an einem Display 52 angezeigt und überprüft werden können, und ermöglicht das Ändern von Einstellungen für das Anvisieren eines Zieles. Natürlich können die gleichen Mechanismen und Einstellungen auch nach dem Anpeilen eines Zielobjektes mittels Zielelement 70 - oder auch ohne vorheriges Anpeilengenutzt werden, um das Vermessungsgerät 1 bzw. den Sendelichtstrahl 13 auf das Zielobjekt auszurichten und zum Beispiel die Distanz zum Zielobjekt mit einer Einzelpunktmessung zu bestimmen oder einen Scan zu starten. Des Weiteren weist das Vermessungsgerät 1 beispielhaft einen Griff 58 für einen einfachen Transport des Geräts 1 auf. Der Griff 58 ist modular vom Messkopf 2 abnehmbar. Für Messungen kann der Griff 58 abgenommenem werden, um einen möglichst grossen Scanbereich erfassen zu können.

Wie aus der Längsschnittansicht gemäss Figur 3 hervorgeht, lässt sich der Rotationskörper 20 zu einer Drehung um die Rotationsachse 11 mittels einer Welle 12 antreiben, vorzugsweise durch einen in dem Motorengehäuse 14 angeordneten Motor 15 (in Fig. 3 nicht dargestellt). Typischerweise ist dazu der Rotationskörper 20 bezüglich der Achse 1 koaxial drehfest mit der Welle 12 verbunden.

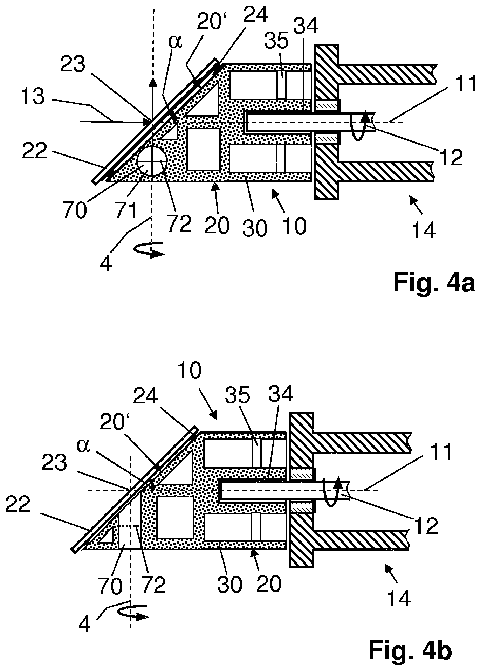

Figur 4a zeigt eine zu dem Ausführungsbeispiel gemäss Figur 3 ähnliche Ausgestaltung einer erfindungsgemässen Rotationseinheit 10, wobei deren Rotationskörper 20 in diesem Beispiel statt aus massivem Metall aus einer relativ leichten, mit Ausnehmungen versehenen Leichtbaustruktur 30 aus Kunststoff besteht. Wobei natürlich auch Leichtbaukonstruktionen aus Stahl oder einem Leichtmetall, wie beispielsweise Aluminium oder aus einem anderen Material denkbar sind. Auf dem freien, abgeschrägten Ende 20' des Rotationskörpers 20 ist als Umlenkelement 22 (vorzugsweise unter 45°) in diesem Beispiel eine polierte Metallplatte oder ein Spiegel angeordnet, die bzw. der über eine Klebeverbindung 24 mit der Stirnfläche 20' des Rotationskörpers 20 fest verbunden ist. Am Umlenkelement 22 wird wie im vorgehenden Beispiel der ausgesandte Sendelichtstrahl 13 in einem Umlenkpunkt 23 umgelenkt, der dem Schnittpunkt der Rotationsachse 11 und der Basisachse 4 entspricht. Teile einer sich durch die Kunststoffstruktur ergebenden Zylinderwand 30 des Rotationskörpers 20 sind über Stützstreben 35 mit dem inneren, zentralen Teil 34 des Rotationskörpers 20, der die Welle 12 aufnimmt, verbunden. Hierdurch ergeben sich Ausnehmungen im Rotationskörper, die über ein dem freien Ende 20' des Rotationskörpers 20 gegenüberliegendes Ende zugänglich sind. Falls notwendig, können hier Auswuchtelemente eingesetzt werden (nicht dargestellt).

Das Zielelement 70 ist, analog zu jenem des Ausführungsbeispiels der Figuren 2 und 3 im Winkle von 90° zur Rotationsachse 11 und zur Basisachse 4 im Rotationskörper 20 angeordnet, wobei der Schnittpunkt in der Zielmarkierung 72 als Fadenkreuz (das Absehen) die Basisachse schneidet, zur Rotationsachse 11 und somit zum Umlenkpunkt 23 aber ein seitlicher Versatz besteht. In das Zielelement 70 sind in diesem Beispiel im Sinne eines Fernrohrs eine Optik 71 und als Zielmarkierung 72 ein Fadenkreuz eingesetzt. Das Zielelement 70 kann wiederum einfach als durchgehende Öffnung ausgebildet sein oder - vorteilhaft für die Herstellung - eine die Optik 71 und die Zielmarkierung 72 aufnehmende Röhre umfassen.

Figur 4b zeigt eine zu dem Ausführungsbeispiel gemäss Figuren 4a ähnliche Ausgestaltung einer Rotationseinheit 10, die nicht unter den Schutzbereich der Ansprüche fällt, wobei der Rotationskörper 20 wiederum aus einer relativ leichten, mit Ausnehmungen versehenen Leichtbaustruktur 30 aus Kunststoff besteht.

Auf dem freien, abgeschrägten Ende 20' des Rotationskörpers 20 ist in diesem Beispiel als Umlenkelement 22 ein halbdurchlässiger Spiegel angeordnet, der über eine Klebeverbindung 24 mit der Stirnfläche 20' des Rotationskörpers 20 fest verbunden ist. Das Zielelement 70 ist aber in diesem Beispiel koaxial zur Basisachse 4 und im Winkel von 90° zur Rotationsachse 11 und diese im Umlenkpunkt 23. schneidend angeordnet. Dies erlaubt dem Benutzer beim Blick durch das Zielelement 70 bzw. die durchgehende Öffnung 70' direkt in die Richtung eines ausgesandten Sendelichtstrahls 13 zu blicken.

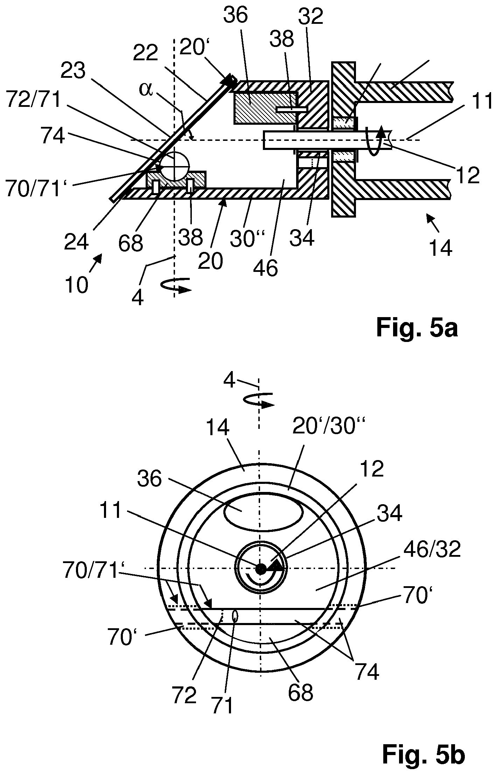

Die Ausführungsform der Rotationseinheit 10 dargestellt in den Figuren 5a und 5b unterscheidet sich von der Ausführungsform gemäss Figur 4a insbesondere dadurch, dass der Rotationskörper 20 als ein hohler, abgeschrägter Zylinder ausgebildet ist, und zwar vorzugsweise gebildet aus einem leichten Metall wie Aluminium oder einer Aluminiumlegierung. Denkbar ist aber auch die Verwendung von Kunststoff, insbesondere faserverstärktem Kunststoff. Ein von dem Zylinder umfasster Hohlraum 46 wird seitlich durch die Zylinderwand 30" und auf dem dem Motorengehäuse 14 zugewandten Ende von einem Zylinderboden 32 begrenzt. Der Hohlraum 46 erstreckt sich bis zum freien, abgeschrägten Ende 20' des Rotationskörpers 10, wobei das Umlenkelement 22 bei dieser Ausgestaltungsform durch Klebeverbindungen 24 an den Stirnflächen der Zylinderwand 30" mit dem Rotationskörper 20 verbunden ist. Die Zylinderwand 30" enthält durchgehende Öffnungen 70' (Figur 5b), die so ausgestaltet sind, dass eine Röhre 74 hierin aufgenommen werden kann. Die Röhre 74 kann kürzer als der durch die durchgehende Öffnungen 70' definierte Abstand zwischen dem Mantel der Zylinderwände 30" des Rotationskörpers 20 sein oder bündig mit dem Mantel dieser Zylinderwände 30" abgerundet sein. Die Röhre 74 dient in diesem Beispiel zur Aufnahme eines Fadenkreuzes als Zielmarkierung 72 und einer Vergrösserungsoptik 71, so dass die Röhre 74 bzw., das Zielelement 70 im Sinne eines Fernrohrs 71' ausgestaltet ist. Die Röhre 74 ist zusätzlich zu einer Fixierung in den durchgehenden Öffnungen 70' auf einem Stützelement 68 abgestützt, das mit Hilfe von wenigstens einem Halteelement 38 an der Zylinderwand 30 des Rotationskörpers 20 passgenau befestigt ist. Die Montage von Röhre 74, Stützelement 68 und möglicherweise nötigen Auswuchtelementen 36 etc. erfolgt vor der Montage des Umlenkelementes 22 vom freien Ende 20' des Rotationskörpers 20 her, vorzugsweise beim Hersteller des Rotationskörpers 20, kann aber natürlich auch nachträglich noch erfolgen. Bei einer ausreichen dicken Zylinderwand 30" kann unter Umständen auf ein Stützelement 68 verzichtet werden. Dies hängt aber z.B. auch von der Wandstärke und dem Material der Röhre 74 ab und von den gewünschten Geschwindigkeiten, mit denen der Rotationskörper 20 bei einem Scan rotieren soll.

Sind Auswuchtelemente 36 vorgesehen, umfassen diese vorteilhaft Material, das ein grösseres spezifisches Gewicht aufweist, als dasjenige, aus dem der Rotationskörper 20 gefertigt ist, wie beispielsweise Messing. Dadurch werden eine statische und eine dynamische Auswuchtung des Rotationskörpers 20 ermöglicht, was eine Belastung der Welle 12 durch Unwucht und durch Unwucht verursachte Wellenbiegungen verhindert sowie durch Unwucht angeregte Vibrationen vermeidet. Eine solche Auswuchtung, unter Einsatz gegeneinander austauschbarer Auswuchtelemente unterschiedlicher Masse und/oder Geometrie, erfolgt typischerweise beim Hersteller der Rotationseinheit 10 bzw. des Rotationskörpers 20. Durch Verwendung unterschiedlicher Materialien für die verschiedenen Komponenten des Rotationskörpers 20 bzw. der Umlenkeinheit 10, beispielsweise Aluminium oder Kunststoff als ein leichteres Material für den Rotationskörper 20 und Messing als ein schwereres Material für Auswuchtelemente 36, kann vorteilhaft die Länge des Rotationskörpers 20 vergleichsweise kurz gestaltet werden.

Figur 5b zeigt die Rotationseinheit 10 aus Figur 5a in Frontalansicht auf den Rotationskörper ohne das Umlenkelement, also mit Blick senkrecht auf die Zylinderachse 11.

Im Zentrum befindet sich die Welle 12 drehbar um die Rotationsachse 11. Konzentrisch darum herum sind, von innen nach aussen aufeinander folgend, ein die Welle 12 aufnehmender Presssitz 34 im Zylinderboden 32, Der Zylinderboden bzw. der davor befindliche Hohlraum 46 sowie die Stirnseite 20' der Zylinderwand 30" und das Motorgehäuse 14 sichtbar. Angrenzend an die Zylinderwand 30" ist in dieser Darstellung oben ein erstes, im Querschnitt rein beispielhaft elliptisch geformtes, Auswuchtelement 36 angeordnet. Für das Zielelement 70 in Figur 5a, 5b gilt, wie auch entsprechend für die Ausführungsformen der Figuren 2, 3, und 4a: Das Zielelement 70 ist mit seiner Achse bzw. mit der Achse seines Sichtfelds (seinem Absehen/Fadenkreuz) die Basisachse 4 im Winkel von 90° schneidend im Rotationskörper 20 angeordnet. Bezüglich der Rotationsachse 11 ist es ebenfalls um 90° verdreht angeordnet, aber mit definiertem seitlichen Versatz zu dieser Achse 11 und zum Umlenkpunkt 23 des Sendelichtstrahls 13 auf dem Umlenkelement 22.

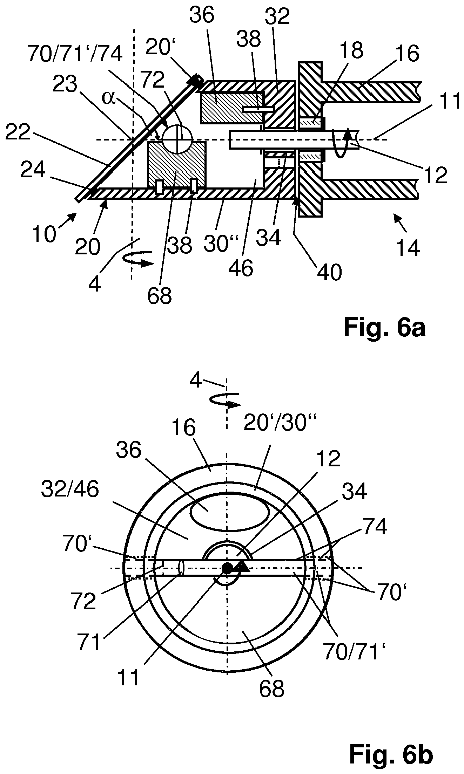

Die Figuren 6a, 6b zeigen eine dem Ausführungsbeispiel gemäss Figuren 5a, 5b sehr ähnliche Ausgestaltung einer erfindungsgemässen Rotationseinheit 10. Ebenso wie in der dort gezeigten Ausführungsform ist das Zielelement 70 hier um einen Winkel von 90° verdreht zur Rotationsachse 11 und in einem Winkel von 90° verdreht zur Basisachse 4 im Rotationskörper 20 angeordnet. In diesem Fall schneidet die Achse des Zielelements 70 bzw. die Achse seines Sichtfeldes aber nicht die Basisachse 4 sondern die Rotationsachse 11 und statt eines definierten Versatzes bezüglich der Rotationsachse 11 findet sich hier ein definierter Versatz bezüglich der Basisachse 4 und zum Umlenkpunkt 23.

Die Figur 7 zeigt eine erfindungsgemässe Rotationseinheit 10 mit einem Rotationskörper 20, der zweiseitig rotierbar gelagert ist, so dass man den Rotationskörper 20 auch als ausgeführt in durchgehender Bauweise bezeichnen könnte. Auf einer Seite ist der Rotationskörper 20 drehfest mit einer ersten von dem Motor 15 angetriebenen Welle 12 verbunden, auf der gegenüberliegenden Seite drehfest mit einer zweiten Welle 86, die freidrehend im Gehäuse 5 gelagert ist.

In einer Variante zu dieser Ausführungsform ist der Rotationsköper als Hohlwelle ausgebildet und einerseits direkt freidrehend im Gehäuse 5 gelagert andererseits direkt mit der Antriebseinheit des Motors verbunden, so dass die Wellen überflüssig sind, was die Bauweise vereinfacht und kostengünstiger gestaltet. Denkbar sind natürlich auch Mischformen dieser beiden Bauweisen.
Das Umlenkelement 22 ist im Rotationskörper 20 integriert und als dreidimensionales optisch umlenkend wirkendes Bauelement 80 ausgebildet, welches in einer Durchblickrichtung 77 für das sichtbare Licht transparent ist, wobei die Durchblickrichtung 77 von einer Einstrahlrichtung 78, in welcher der Sendelichtstrahl 13 auf das Umlenkelement 22 trifft, abweicht, und das Umlenkelement 22 derart im Rotationskörper 20 integriert ist, dass man beim Blicken durch die durch den Rotationskörper 20 hindurchgehende Öffnung des Zielelements 70 in Durchblickrichtung 77 durch das optische Bauelement 80 blickt. In dem hier gezeigten Beispiel weicht die Durchblickrichtung 77 von der Einstrahlrichtung 78 und von der Ablenkrichtung 79, unter welcher der Sendestrahl 13 von dem Umlenkelement 22 in die Umgebung gesandt wird, ab, wobei in diesem Beispiel vorteilhaft die Durchblickrichtung 77, die Einstrahlrichtung 78 und die Ablenkrichtung 79 jeweils senkrecht aufeinander stehen. Es versteht sich, dass für den reflektierten Sendelichtstrahl 13, der als Empfangslichtstrahl 17 (hier nicht dargestellt) auf dem Umlenkelement 22 eintrifft, sich Einstrahlrichtung 78 und Ablenkrichtung 79 umkehren (nicht dargestellt).

In dem in Fig. 7 gezeigten Beispiel ist das dreidimensionale, optisch umlenkend wirkende Bauelement 80 als Prisma ausgebildet und zwar mit einer typischen dreieckigen Ausgestaltung im Querschnitt. Ebenso wäre aber ein anderes optisch umlenkend wirkendes Bauelement oder ein Prisma mit einer anderen Prismenform denkbar, je nachdem, was den jeweiligen Anforderungen am besten angepasst ist.
In der Ausführungsform der in Figur 7 ausschnittsweise gezeigten Vermessungsgeräts 1 weisen der Rotationskörper 20 und alle weiteren nötigen Bauelemente, in diesem Beispiel insbesondere die zweite Welle 86 des Vermessungsgerätes 1, einen Passierweg 82 auf, auf welchem Sendelichtstrahl 13 und Empfangslichtstrahl 17 zum Umlenkelement 22 und von diesem weg geleitet werden. Im gezeigten Beispiel ist der Rotationskörper 20 aus Metall und als Hohlzylinder gefertigt, so dass sein Hohlraum 46 zugleich einen Teil des Passierwegs 82 bildet. Einen weiteren Teil des Passierweges bildet eine Öffnung 75 in der Zylinderwand des als Hohlzylinder Rotationskörpers 20 der im Bezug zum Umlenkmittel 22 in Ablenkrichtung 79, den Weg für den Sendelichtstrahl 13 und Empfangslichtstrahl 17 (nicht dargestellt) frei gibt.
Im gezeigten Beispiel ist das dreidimensionale, optisch wirksame Bauelement 80 in Durchblickrichtung mit einer mit einer Zielmarkierung 72 in Form eines Fadenkreuzes versehen. Des Weiteren kann auch eine Optik 71 zum Beispiel zur Vergrösserung vorgesehen sein. Optik 71 wie auch Zielmarkierung 72 können direkt in Durchblickrichtung 77 an dem dreidimensionalen, optisch wirksamen Bauelement 80 appliziert sein. Dabei können optische Linsen beispielsweise in Durchblickrichtung 77 aufgeklebt oder mittels einer entsprechenden Halterung an dem optisch wirksamen Bauelement 80 befestigt sein. Auch die Zielmarkierung 72 kann in Durchblickrichtung 77 auf das dreidimensionale, optisch wirksame Bauelement 80 aufgeklebt, aufgemalt oder mittels entsprechender Halterung an ihm befestigt sein.

In den oben gegebenen Ausführungen sind verschiedene Details beispielhaft in Kombination miteinander gezeigt und/oder beschrieben worden. Dies bedeutet jedoch nicht, dass diese nur in der gezeigten und/oder beschriebenen Form miteinander kombiniert werden können. Der Fachmann weiß, in welcher Weise sich Details der vorangehend gezeigten und/oder beschriebenen Ausführungsformen im Rahmen der in den Ansprüchen beanspruchten Erfindung sinnvoll miteinander kombinieren lassen, auch wenn hier aus Platzgründen nicht alle Kombinationen dargestellt werden konnten.

## Patentansprüche

1. Vermessungsgerät (1) in Form eines Laserscanners, zum optischen Vermessen einer Umgebung, mit einem Messkopf (2), dessen Gehäuse (5) auf einer Basis (3) drehbar um eine Basisachse (4) gelagert ist, und mit
- einer im Gehäuse (5) des Messkopfs (2) integrierten Strahlenquelle (6) zur Erzeugung eines Sendelichtstrahls (13),
- einem im Gehäuse (5) des Messkopfs (2) integrierten Empfangssensor (8) zum Detektieren eines als Empfangslichtstrahl (17) zurückkommenden, reflektierten Sendelichtstrahls (13), und
- mit einer auf einer der Strahlenquelle (6), dem Empfangssensor (8) und optischen Komponenten (7) gegenüberliegenden Seite des Gehäuses (5) gelagerten Rotationseinheit (10), welche einen wenigstens einseitig um seine Rotationsachse (11) rotierbar gelagerten Rotationskörper (20) mit einem Umlenkelement (22) zum ausgerichteten Umlenken des Sendelichtstrahls (13) in die Umgebung und zum Einfangen und Umlenken des Empfangslichtstrahls (17) aufweist, wobei
- der Rotationskörper (20) im Wesentlichen zylindrisch ist und die Rotationsachse (11) seine Zylinderachse ist; und wobei
- eine Einstrahlrichtung, in welcher der Sendelichtstrahl (13) während des Betriebs auf das Umlenkelement (22) trifft, der Ausrichtung der Rotationsachse (11) entspricht, und
- wobei Basisachse (4) und Rotationsachse (11) im Wesentlichen senkrecht aufeinander stehen,
- im Rotationskörper (20) ein Zielelement (70) integriert ist,
- der Rotationskörper (20) eine durch den Rotationskörper (20) hindurch gehende Öffnung (70') aufweist, die Bestandteil des Zielelementes (70) ist und durch die hindurch gesehen und ein Ziel anvisiert werden kann,
**dadurch gekennzeichnet, dass**
- eine Durchblickrichtung (77) durch das Zielelement (70) bzw. durch die durchgehende Öffnung (70') des Zielelements (70) sowie die Einstrahlrichtung des Sendelichtstrahls (13) auf das Umlenkelement (22) und eine Ablenkrichtung, in welche der Sendelichtstrahl (13) durch das Umlenkelement (22) abgelenkt wird, jeweils senkrecht aufeinander stehen.

2. Vermessungsgerät (1) nach Anspruch 1,
**dadurch gekennzeichnet, dass**
eine Steuereinheit (9) vorgesehen ist, die mittels einer Software derart konfiguriert ist, dass
- Raumkoordinaten eines mit Hilfe des Zielelements (70) anvisierten Ziels erfassbar und speicherbar sind und Motoren zum Verdrehen von Rotationskörper (20) und/oder Messkopf (2) derart steuerbar sind, dass der Sendelichtstrahl (13) auf dieses Ziel ausrichtbar ist und/oder
- Motoren zum Verdrehen von Messkopf (2) und/oder Rotationskörper (20) so ansteuerbar sind, dass das im Rotationskörper (20) integrierte Zielelement (70) auf vorbestimmte Koordinaten ausrichtbar ist.

3. Vermessungsgerät (1) nach Anspruch 1 oder 2,
**dadurch gekennzeichnet, dass**
das Zielelement (70) eine in den Rotationskörper (20) einschiebbare Röhre (74) oder ein Fernrohr (71') umfasst.

4. Vermessungsgerät (1) nach einem der vorhergehenden Ansprüche,
**dadurch gekennzeichnet, dass**
das Zielelement (70) mit einer Optik (71) und/oder mit einer Zielmarkierung (72) ausgestattet ist.

5. Vermessungsgerät (1) nach einem der vorhergehenden Ansprüche,
**dadurch gekennzeichnet, dass**
das Zielelement (70) mit seiner durchgehenden Öffnung (70') im Rotationskörper (20) - und daher auch die Ausrichtung des Sichtfeldes des Zielelements (70) - in einem definierten Winkel zur Rotationsachse (11) und zur Basisachse (4) angeordnet ist, so dass die Ausrichtung der durchgehenden Öffnung (70') bzw. des Zielelements (70) über vorhandene Winkelencoder genau bekannt ist.

6. Vermessungsgerät (1) nach einem der vorhergehenden Ansprüche,
**dadurch gekennzeichnet, dass**
der Rotationskörper (20) aus einem leichten Material mit geringem spezifischen Gewicht gefertigt ist, wobei das Material, einen oder mehrere der folgenden Werkstoffe umfasst: Kunststoff, faserverstärkter Kunststoff, Leichtmetall, Aluminium, eine Aluminiumlegierung.

7. Vermessungsgerät (1) nach einem der vorhergehenden Ansprüche,
**dadurch gekennzeichnet, dass**
der Rotationskörper (20) abgesehen von der ihn durchdringenden durchgehenden Öffnung (70') massiv ausgebildet ist

8. Vermessungsgerät (1) nach einem der Ansprüche 1 bis 6,
**dadurch gekennzeichnet, dass**
der Rotationskörper (20) in Form einer Leichtbaustruktur (30) mit gewichts- und materialeinsparenden Materialaussparungen gefertigt ist.

9. Vermessungsgerät (1) nach einem der Ansprüche 1 bis 6,
**dadurch gekennzeichnet, dass**
der Rotationskörper (20) als Hohlzylinder ausgebildet ist und das Zielelement (70) eine einschiebbare Röhre (74) und/oder ein optisch wirksames Bauelement (80) umfasst.

10. Vermessungsgerät (1) nach einem der vorhergehenden Ansprüche,
**dadurch gekennzeichnet, dass**
- der Rotationskörper (20) einseitig rotierbar gelagert ist und ein abgeschrägtes, freies Ende (20') aufweist,
- wobei das Umlenkelement (22) an dem abgeschrägten, freien Ende (20') vorgesehen ist.

11. Vermessungsgerät (1) nach einem der Ansprüche 1 bis 9,
**dadurch gekennzeichnet, dass**
- der Rotationskörper (20) zweiseitig rotierbar gelagert ist,
- das Umlenkelement (22) im Rotationskörper (20) integriert ist und der Rotationskörper (20) und alle weiteren nötigen Bauelemente des Vermessungsgerätes (1) einen Passierweg (82) aufweisen, auf welchem Sendelichtstrahl (13) und Empfangslichtstrahl (17) zum Umlenkelement (22) und vom Umlenkelement (22) weg leitbar sind.

12. Vermessungsgerät (1) nach einem der vorhergehenden Ansprüche,
**dadurch gekennzeichnet, dass**
- das Umlenkelement (22) als flacher Spiegel ausgebildet ist und in einem Winkel von 45° zur Rotationsachse (11) und zur Basisachse (4) derart ausgerichtet ist, dass der Sendelichtstrahl während des Betriebs auf dem Umlenkelement (22) in einem Umlenkpunkt (23) auftrifft und umgelenkt wird, wobei der Umlenkpunkt (23) dem Schnittpunkt der Rotationsachse (11) und der Basisachse (4) entspricht.

13. Vermessungsgerät (1) nach einem der vorhergehenden Ansprüche,
**dadurch gekennzeichnet, dass**
das Umlenkelement (22) ein flacher Spiegel oder eine polierte Metallfläche ist.

14. Vermessungsgerät (1) nach Anspruch 11,
**dadurch gekennzeichnet, dass**
das Umlenkelement (22) ein dreidimensionales, optisch umlenkend wirkendes Bauelement (80) und insbesondere ein Prisma ist, welches in einer Durchblickrichtung (77) für das sichtbare Licht transparent ist und das Umlenkelement (22) derart im Rotationskörper (20) integriert ist, dass man beim Blicken durch die durch den Rotationskörper (20) hindurchgehende Öffnung (70') des Zielelements (70) in Durchblickrichtung (77) durch das optisch wirksame Bauelement (80) blickt, wobei das optisch wirksame Bauelement (80) in Durchblickrichtung (77) vorzugsweise mit einer Optik (71) und/oder mit einer Zielmarkierung (72) versehen ist.

## Claims

1. Measuring device (1), in the form of a laser scanner, for optically measuring an environment, comprising a measuring head (2), the housing (5) of which is mounted rotatably about a base axis (4) on a base (3), and comprising
- a beam source (6) integrated in the housing (5) of the measuring head (2) and serving for generating a transmission light beam (13),
- a reception sensor (8) integrated in the housing (5) of the measuring head (2) and serving for detecting a reflected transmission light beam (13) returning as a reception light beam (17), and
- comprising a rotation unit (10), which is mounted on a side of the housing (5) which is opposite the beam source (6), the reception sensor (8) and optical components (7) and which has a rotation body (20), which is mounted rotatably about its rotation axis (11) at least on one side, with a deflection element (22) for the aligned deflection of the transmission light beam (13) into the environment and for the capture and deflection of the reception light beam (17), wherein
- the rotation body (20) is substantially cylindrical and the rotation axis (11) is its cylinder axis; and wherein
- a direction of incidence in which the transmission light beam (13) impinges on the deflection element (22) during operation corresponds to the alignment of the rotation axis (11), and
- wherein basis axis (4) and rotation axis (11) are substantially perpendicular to one another,
- a targeting element (70) is integrated in the rotation body (20),
- the rotation body (20) has an opening (70') passing through the rotation body (20), which opening is part of the targeting element (70) and through which opening it is possible for viewing to be carried out and a target can be aimed at,
**characterized in that**
- a viewing direction (77) through the targeting element (70) or through the through opening (70') of the targeting element (70) and the direction of incidence of the transmission light beam (13) on the deflection element (22) and a deflecting direction in which the transmission light beam (13) is deflected by the deflection element (22) are in each case perpendicular to one another.

2. Measuring device (1) according to Claim 1,
**characterized in that**
a control unit (9) is provided, which is configured by means of software in such a way that
- spatial coordinates of a target sighted with the aid of the targeting element (70) are acquirable and storable and motors for rotating rotation body (20) and/or measuring head (2) are controllable in such a way that the transmission light beam (13) is alignable with said target and/or
- motors for rotating measuring head (2) and/or rotation body (20) are drivable such that the targeting element (70) integrated in the rotation body (20) is alignable with predetermined coordinates.

3. Measuring device (1) according to Claim 1 or 2,
**characterized in that**
the targeting element (70) comprises a tube (74) insertable into the rotation body (20), or a telescope (71').

4. Measuring device (1) according to any one of the preceding claims,
**characterized in that**
the targeting element (70) is equipped with an optical unit (71) and/or with a target marking (72) .

5. Measuring device (1) according to any one of the preceding claims,
**characterized in that**
the targeting element (70) with its through opening (70') in the rotation body (20) - and therefore also the alignment of the field of view of the targeting element (70) - is arranged at a defined angle with respect to the rotation axis (11) and to the base axis (4), such that the alignement of the through opening (70') or of the targeting element (70) is accurately known by means of angle encoders present.

6. Measuring device (1) according to any one of the preceding claims,
**characterized in that**
the rotation body (20) is produced from a lightweight material having a low relative density, wherein the material comprises one or more of the following substances: plastic, fiber reinforced plastic, light metal, aluminum, an aluminum alloy.

7. Measuring device (1) according to any one of the preceding claims,
**characterized in that**
the rotation body (20), apart from the through opening (70') penetrating through it is embodied in a solid fashion.

8. Measuring device (1) according to any one of Claims 1 to 6,
**characterized in that**
the rotation body (20) is produced in the form of a lightweight structure (30) having weight-saving and material-saving material cutouts.

9. Measuring device (1) according to any one of Claims 1 to 6,
**characterized in that**
the rotation body (20) is embodied as a hollow cylinder, and the targeting element (70) comprises an insertable tube (74) and/or an optically active component (80).

10. Measuring device (1) according to any one of the preceding claims,
**characterized in that**
- the rotation body (20) is mounted rotatably on one side and has a beveled, free end (20'),
- wherein the deflection element (22) is provided at the beveled, free end (20').

11. Measuring device (1) according to any one of Claims 1 to 9,
**characterized in that**
- the rotation body (20) is mounted rotatably on two sides,
- the deflection element (22) is integrated in the rotation body (20), and the rotation body (20) and all further required components of the measuring device (1) have a passing path (82) on which transmission light beam (13) and reception light beam (17) are guidable to the deflection element (22) and away from the deflection element (22).

12. Measuring device (1) according to any one of the preceding claims,
**characterized in that**
- the deflection element (22) is embodied as a flat mirror and is aligned at an angle of 45° with respect to the rotation axis (11) and with respect to the base axis (4) in such a way that the transmission light beam impinges on the deflection element (22) at a deflection point (23) and is deflected during operation, wherein the deflection point (23) corresponds to the point of intersection of the rotation axis (11) and the base axis (4).

13. Measuring device (1) according to any one of the preceding claims,
**characterized in that**
the deflection element (22) is a flat mirror or a polished metal surface.

14. Measuring device (1) according to Claim 11,
**characterized in that**
the deflection element (22) is a three-dimensional component (80) having an optically deflecting effect and is a prism, in particular, which is transparent to the visible light in a viewing direction (77) and the deflection element (22) is integrated in the rotation body (20) in such a way that one looks through the optically active component (80) when looking through the opening (70') in the targeting element (70), said opening passing through the rotation body (20), in the viewing direction (77), wherein the optically active component (80) is preferably provided with an optical unit (71) and/or with a target marking (72) in the viewing direction (77).

## Revendications

1. Appareil de mesure (1) sous forme de scanner laser pour la mesure optique d'un environnement, avec une tête de mesure (2) dont le boîtier (5) est positionné sur une base (3) en étant rotatif autour d'un axe de la base (4) et avec
- une source de rayons (6) intégrée au boîtier (5) de la tête de mesure (2) pour produire un rayon lumineux d'émission (13),
- un capteur de réception (8) intégré au boîtier (5) de la tête de mesure (2) pour détecter un rayon lumineux d'émission (13) réfléchi qui revient en tant que rayon lumineux de réception (17) et
- avec une unité de rotation (10) positionnée sur un côté du boîtier (5) en face de la source de rayons (6), du capteur de réception (8) et de composants optiques (7), qui présente un corps de rotation (20) positionné rotatif au moins d'un côté autour de son axe de rotation (11) avec un élément de déviation (22) pour la déviation orientée du rayon lumineux d'émission (13) dans l'environnement et pour la capture et la déviation du rayon lumineux de réception (17), cependant que
- le corps de rotation (20) est sensiblement cylindrique et l'axe de rotation (11) est son axe de cylindre et cependant
- qu'un sens de rayonnement dans lequel le faisceau lumineux d'émission (13) touche, pendant le fonctionnement, l'élément de déviation (22) correspond à l'orientation de l'axe de rotation (11) et
- cependant que l'axe de la base (4) et l'axe de rotation (11) sont sensiblement perpendiculaires l'un à l'autre,
- un élément de visée (70) est intégré au corps de rotation (20),
- le corps de rotation (20) présente une ouverture (70'), qui traverse le corps de rotation (20) de bout en bout, qui est une partie de l'élément de visée (70) et à travers laquelle on peut voir et cibler une cible,
**caractérisé en ce**
- **qu'**un sens de vue à travers (77) à travers l'élément de visée (70) ou à travers l'ouverture de bout en bout (70') de l'élément de visée (70) ainsi que le sens de rayonnement du rayon lumineux d'émission (13) sur l'élément de déviation (22) et un sens de déviation dans lequel le rayon lumineux d'émission (13) est dévié par l'élément de déviation (22) sont chacun perpendiculaires l'un à l'autre.

2. Appareil de mesure (1) selon la revendication 1, **caractérisé en ce qu'**il est prévu une unité de commande (9) qui est configurée au moyen d'un logiciel de telle manière que
- des coordonnées de l'espace d'une cible visée à l'aide de l'élément de visée (70) peuvent être détectées et mémorisées et que des moteurs pour faire tourner le corps de rotation (20) et/ou la tête de mesure (2) peuvent être commandés de telle manière que le rayon lumineux d'émission (13) peut être orienté sur cette cible et/ou
- des moteurs pour faire tourner la tête de mesure (2) et/ou le corps de rotation (20) peuvent être commandés de telle manière que l'élément de visée (70) intégré au corps de rotation (20) peut être orienté sur des coordonnées prédéfinies.

3. Appareil de mesure (1) selon la revendication 1 ou 2, **caractérisé en ce que** l'élément de visée (70) comprend un tuyau (74) qui peut être inséré par coulissement dans le corps de rotation (20) ou un télescope (71').

4. Appareil de mesure (1) selon l'une des revendications précédentes, **caractérisé en ce que** l'élément de visée (70) est équipé d'une optique (71) et/ou d'un marquage de visée (72).

5. Appareil de mesure (1) selon l'une des revendications précédentes, **caractérisé en ce que** l'élément de visée (70) est placé avec son ouverture de bout en bout (70') dans le corps de rotation (20) - et donc aussi l'orientation du champ de vision de l'élément de visée (70) - dans un angle défini par rapport à l'axe de rotation (11) et par rapport à l'axe de la base (4) si bien que l'orientation de l'ouverture de bout en bout (70') ou de l'élément de visée (70) est connue avec précision par des codeurs angulaires existants.

6. Appareil de mesure (1) selon l'une des revendications précédentes, **caractérisé en ce que** le corps de rotation (20) est fabriqué en un matériau léger avec un poids spécifique faible, cependant que le matériau comprend un ou plusieurs des matériaux suivants : le plastique, le plastique renforcé par des fibres, le métal léger, l'aluminium, un alliage d'aluminium.

7. Appareil de mesure (1) selon l'une des revendications précédentes, **caractérisé en ce que** le corps de rotation (20) est fabriqué plein, à part l'ouverture de bout en bout (70') qui le traverse entièrement.

8. Appareil de mesure selon l'une des revendications1 à 6, **caractérisé en ce que** le corps de rotation (20) est fabriqué en forme de structure légère (30) avec des évidements de matériau qui économisent le poids et le matériau.

9. Appareil de mesure (1) selon l'une des revendications1 à 6, **caractérisé en ce que** le corps de rotation (20) est configuré comme un cylindre creux et l'élément de visée (70) comprend un tuyau qui peut être inséré par coulissement (74) et/ou un composant actif du point de vue optique (80).

10. Appareil de mesure (1) selon l'une des revendications précédentes, **caractérisé en ce que**
- le corps de rotation (20) est positionné rotatif d'un côté et présente une extrémité libre biseautée (20'),
- cependant que l'élément de déviation (22) est prévu sur l'extrémité libre biseautée (20').

11. Appareil de mesure (1) selon l'une des revendications1 à 9, **caractérisé en ce que**
- le corps de rotation (20) est positionné rotatif des deux côtés,
- l'élément de déviation (22) est intégré au corps de rotation (20) et le corps de rotation (20) et tous les autres composants nécessaires de l'appareil de mesure (1) présentent un trajet de passage (82) sur lequel le rayon lumineux d'émission (13) et le rayon lumineux de réception (17) peuvent être conduits vers l'élément de déviation (22) et en s'éloignant de l'élément de déviation (22).

12. Appareil de mesure (1) selon l'une des revendications précédentes, **caractérisé en ce que**
- l'élément de déviation (22) est configuré comme un miroir plat et est orienté dans un angle de 45° par rapport à l'axe de rotation (11) et à l'axe de la base (4) de telle manière que le rayon lumineux d'émission, pendant le fonctionnement, touche l'élément de déviation (22) et est dévié dans un point de déviation (23), cependant que le point de déviation (23) correspond au point d'intersection de l'axe de rotation (11) et de l'axe de la base (4).

13. Appareil de mesure (1) selon l'une des revendications précédentes, **caractérisé en ce que** l'élément de déviation (22) est configuré comme un miroir plat ou une surface métallique polie.

14. Appareil de mesure (1) selon la revendication 11, **caractérisé en ce que** l'élément de déviation (22) est un composant tridimensionnel, actif par déviation optique (80) et, en particulier, est un prisme, qui est transparent pour la lumière visible dans un sens de vue à travers (77) et que l'élément de déviation (22) est intégré au corps de rotation (20) de telle manière que, lorsque l'on regarde à travers l'ouverture (70') de l'élément de visée (70) qui traverse complètement le corps de rotation (20), on regarde à travers le composant actif du point de vue optique (80), cependant que le composant actif du point de vue optique (80) est pourvu, dans le sens de vue à travers (77), de préférence d'une optique (71) et/ou d'un marquage de visée (72).
